# EUROPÄISCHE PATENTANMELDUNG

(11) **EP 4 684 866 A1**
(43) Veröffentlichungstag der Anmeldung: **28.01.2026**
(21) Anmeldenummer: 24191210.4
(22) Anmeldetag: 26.07.2024
(51) Int. Cl.: B01D 53/86, C04B 7/36, F23G 5/00

(54) **VERFAHREN ZUR REINIGUNG VON GASFÖRMIGE ORGANISCHE STOFFE ENTHALTENDEN RAUCHGASEN**

(71) Anmelder: Scheuch Management Holding GmbH, 4971 Aurolzmünster (AT)
(72) Erfinder: FELLNER, Thomas, 5145 Neukirchen an der Enknach (AT); GASSER, Tobias, 5202 Neumarkt (AT)
(74) Vertreter: SONN Patentanwälte GmbH & Co KG

(57) **Zusammenfassung**

Verfahren zur Reinigung von gasförmige organische Stoffe enthaltenden Rauchgasen mit den Schritten:
Katalytisches Oxidieren der gasförmigen organischen Stoffe an zumindest einem Oxidationskatalysator,
Erwärmen der Rauchgase (7) vor der katalytischen Oxidation durch Wärmeaustausch der rückgewonnenen Restwärme der gereinigten Rauchgase (12) auf eine katalytische Reaktionstemperatur (T_{R})
dadurch gekennzeichnet, dass
vor der katalytischen Oxidation der gasförmigen organischen Stoffe im Rauchgas befindliches Ammoniak (NH₃) an einem Ammoniak-Abbau-Katalysator (16) abgebaut wird.

## Beschreibung

Die Erfindung betrifft ein Verfahren zur Reinigung von gasförmige organische Stoffe enthaltenden Rauchgasen mit den Schritten:
Katalytisches Oxidieren der gasförmigen organischen Stoffe und
Erwärmen der Rauchgase vor der katalytischen Oxidation durch Wärmeaustausch der rückgewonnenen Restwärme der gereinigten Rauchgase auf eine katalytische Reaktionstemperatur (T_{R}).

Weiters betrifft die Erfindung ein Verfahren zur Zementklinkerherstellung und ein Verfahren zur Verbrennung von Abfällen.

Schließlich betrifft die Erfindung eine Vorrichtung zur Reinigung von gasförmige organische Stoffe enthaltenden Rauchgasen, aufweisend:
zumindest einen Oxidationskatalysator zur katalytischen Oxidation von gasförmigen organischen Stoffen und
zumindest einen Wärmetauscher zur Erwärmung der Rauchgase aus Rückgewinnung der Restwärme der gereinigten Rauchgase vor der katalytischen Oxidation auf eine katalytische Reaktionstemperatur (T_{R}).

Bei industriellen Verfahren, wie beispielsweise der Müll- oder Biomasseverbrennung, Glasherstellung, Zementklinkerherstellung, Kalkherstellung, Lithiumaufbereitung oder auch in der Papierindustrie entstehen großvolumige Rauchgasströme, welche häufig mit Schadstoffen wie zum Beispiel Stickoxiden, Ammoniak und gasförmigen organischen Stoffen belastet sind. Die gesetzlichen Auflagen für Industrieanlagen zum Ausstoß von Schadstoffen werden laufend verschärft, daher soll der Ausstoß von Schadstoffen reduziert werden. Auch die Anforderungen an die Energieeffizienz werden laufend erhöht. Diesen Zielen stehen hohe Investitions- und Betriebskosten gegenüber, welche mit der Nachbehandlung großvolumiger Rauchgasströme einhergehen.

Im Stand der Technik sind verschiedene Verfahren zur Entfernung von gasförmigen organischen Stoffen aus Rauchgasen bekannt. In der Regel beruhen diese Verfahren auf thermischer oder katalytischer Oxidation der gasförmigen organischen Stoffe, wobei bevorzugt Kohlendioxid (CO₂) entsteht. Dieser Oxidationsprozess ist zwar grundsätzlich exotherm, dennoch muss üblicherweise das Rauchgas zuvor auf eine ausreichend hohe Reaktionstemperatur erhitzt werden. Um die Energieeffizienz des Verfahrens zu erhöhen, kann ein Teil der zur Aufheizung des Rauchgases eingesetzten Energie mittels Wärmeaustausch zurückgewonnen werden. Für diesen Zweck kommen im Stand der Technik sowohl regenerative, als auch rekuperative Wärmetauscher zum Einsatz.

Bei der regenerativen thermischen Oxidation (RTO), bekannt unter anderem aus der EP 0 472 605 B1, durchströmt das Rauchgas erst eine heiße Wärmespeichermasse, bevor das Rauchgas in einer Brennkammer auf die für die thermische Oxidation nötige Temperatur (um 850 °C) erhitzt wird. Danach durchströmt das Rauchgas eine weitere Wärmespeichermasse und gibt dabei wieder Wärme ab. Durch periodisches Umschalten der Strömungsrichtung werden die Wärmespeichermassen abwechselnd erwärmt und gekühlt. Ein Nachteil dieses Verfahrens besteht darin, dass im Rauchgas befindliche Substanzen, wie beispielsweise Ammoniak, an den unteren Regeneratorlagen adsorbiert werden können. Diese Substanzen können dann beim Wechsel der Strömungsrichtung wieder ausgetragen werden und gelangen somit unbehandelt zum Kamin. Besonders niedrige Ammoniak-Grenzwerte können bei diesem Verfahren mitunter nicht eingehalten werden.

Ähnlich aufgebaut sind Anlagen zur regenerativen katalytischen Oxidation (RCO). Allerdings wird dabei kein Brenner benötigt, sondern die Oxidation erfolgt an einem Katalysator, der normalerweise Edelmetalle wie Palladium und/oder Platin als katalytisch aktive Substanzen enthält. Der Vorteil der RCO liegt darin, dass für die katalytische Oxidation wesentlich geringere Temperaturen (300-500 °C) als für die thermische Oxidation erforderlich sind. Allerdings sind die benötigten edelmetallhaltigen Katalysatoren üblicherweise sehr teuer und empfindlich gegenüber diversen Schadstoffen. So kann beispielsweise Ammoniak die aktiven Zentren des Katalysators belegen und so die Aktivität des Katalysators hemmen. Zudem können schwefelhaltige Verbindungen eine irreversible Vergiftung des Katalysators verursachen. In Anwesenheit dieser Schadstoffe nimmt die Standzeit des Katalysators rapide ab, wodurch ein häufiger kostenintensiver Katalysatortausch notwendig wird.

Aus der AT 507773 A4 ist ein Verfahren zur regenerativen thermischen Oxidation von gasförmigen organischen Stoffen in Kombination mit einer selektiven katalytischen Reduktion (SCR) von Stickoxiden bekannt.

Neben der SCR ist auch die selektive nicht-katalytische Reduktion (SNCR) von Stickoxiden bekannt.

Die AT 508 921 B1 offenbart ein Verfahren zur regenerativen katalytischen Oxidation von gasförmigen organischen Stoffen in Kombination mit einer selektiven katalytischen Reduktion (SCR) von Stickoxiden. Erwähnt wird zudem, dass die regenerativen Wärmespeicher durch einen rekuperativen Wärmetauscher ersetzt werden können. In dieser Variante erfolgt kein periodischer Wechsel der Strömungsrichtung, wodurch das Problem der Substanzen, welche beim Wechsel der Strömungsrichtung unbehandelt ausgetragen werden, vermieden wird. Allerdings sind die im Stand der Technik verwendeten edelmetallhaltigen Oxidationskatalysatoren teuer in der Anschaffung und anfällig auf Vergiftung durch schwefelhaltige Verbindungen. Daher ist ein häufiger Katalysatortausch nötig, was hohe Betriebskosten verursacht. Zudem kann Ammoniak die aktiven Zentren des Katalysators belegen und so die Aktivität des Katalysators hemmen.

Die EP 2 545 337 B1 offenbart ein Verfahren zur selektiven katalytischen Reduktion (SCR) von Stickoxiden in Kombination mit einem rekuperativen Wärmetauscher.

Die EP 3 672 713 B1 offenbart eine Katalysatorvorrichtung mit einem Entstickungskatalysator zur Minderung von Stickoxiden und einem nachgeschalteten Oxidationskatalysator zur Minderung von Kohlenmonoxid.

Demgegenüber besteht die Aufgabe der vorliegenden Erfindung darin, zumindest einzelne Nachteile des Standes der Technik zu lindern bzw. zu lösen. Die Erfindung setzt sich bevorzugt zum Ziel, den Ausstoß von gasförmigen organischen Stoffen, vorzugsweise zudem von Kohlenmonoxid (CO), zu minimieren und zugleich sowohl die Investitions- als auch die Betriebskosten der Rauchgasreinigung möglichst gering zu halten.

Diese Aufgabe wird durch ein Verfahren zur Reinigung von gasförmige organische Stoffe enthaltenden Rauchgasen nach Anspruch 1, ein Verfahren zur Zementklinkerherstellung nach Anspruch 10, ein Verfahren zur Verbrennung von Abfällen nach Anspruch 11 und eine Vorrichtung nach Anspruch 12 gelöst. Bevorzugte Ausführungsformen der Erfindung sind in den abhängigen Ansprüchen angegeben.

Erfindungsgemäß wird vor der katalytischen Oxidation der gasförmigen organischen Stoffe im Rauchgas befindliches Ammoniak (NH₃) in einem Ammoniak-Abbau-Katalysator abgebaut.

Ammoniak-Abbau-Katalysatoren, die eine selektive Oxidationsfunktion für Ammoniak (NH₃) bieten, sind im Stand der Technik bekannt. Diese werden in der Regel einer SCR- oder SNCR-Anlage nachgeschalten, um den Ausstoß von NH₃ zu verringern, welcher in verschiedenen Ländern durch Grenzwerte reguliert ist. Durch die üblicherweise dynamische Fahrweise von SCR-Anlagen treten dort immer wieder Überschüsse in der NH₃-Dosierung auf, welche nicht mit Stickoxiden abreagieren. In einem nachgeschaltenen Ammoniak-Abbau-Katalysator, der auch als Ammoniak-Slipkiller bezeichnet wird, wird überschüssiges NH₃ zu Stickstoff (N₂) umgesetzt, wodurch die NH₃-Emissionen am Kamin verringert und die gesetzlichen Grenzwerte eingehalten werden können.

Der Ammoniak-Abbau-Katalysator ist ein Katalysator, der imstande ist, Ammoniak (NH₃) in Anwesenheit eines Oxidationsmittels wie beispielsweise Stickoxiden (NOₓ), Sauerstoff (O₂) und/oder Ozon (O₃) abzubauen und bevorzugt zu Stickstoff (N₂) umzusetzen. Vorzugsweise wird im Ammoniak-Abbau-Katalysator NH₃ erst zu NO (Stickstoffmonoxid) umgesetzt, welches dann weiter zu N₂ reagiert.

Ammoniak (NH₃) kann nicht nur beim Ausstoß durch den Kamin, sondern auch bereits während der Abgasreinigung Probleme verursachen. Insbesondere bei der Verbrennung von Abfallstoffen, wie beispielsweise Klärschlamm, kann das Rauchgas erhebliche Mengen an Ammoniak enthalten, auch wenn es noch keine SCR- oder SNCR-Anlage passiert hat. Beispielsweise kann NH₃ die katalytische Oxidation in dem zumindest einem Oxidationskatalysator hemmen bzw. inhibieren. Dabei werden insbesondere die katalytisch aktiven Zentren des Oxidationskatalysators durch Ammoniak belegt, wodurch die Abbaurate kohlenstoffhaltiger Verbindungen verringert wird. Daher ist es vorteilhaft, NH₃ bereits vor dem Eintritt des Rauchgases in den zumindest einen Oxidationskatalysator aus dem Rauchgas zu entfernen, um eine optimale Funktion des zumindest einen Oxidationskatalysators sicherzustellen. Dies gilt insbesondere dann, wenn ein edelmetallhaltiger, insbesondere ein palladium- und/oder platinhaltiger, Oxidationskatalysator eingesetzt wird, welcher üblicherweise mit besonders hohen Investitionskosten verbunden ist.

Der Abbau von im Rauchgas befindlichem Ammoniak vor dem Eintritt der Rauchgase in den zumindest einen Oxidationskatalysator führt vorzugsweise dazu, dass die Besetzung von aktiven Zentren des Katalysators durch NH₃ nicht mehr stattfindet.

Durch das Vorsehen eine Ammoniak-Abbau-Katalysators kann daher die Größe und/oder Menge des zumindest einen Oxidationskatalysators, sowie dessen Betriebstemperatur reduziert werden. Durch die Verwendung eines dem zumindest einen Oxidationskatalysator vorgeschaltenen Ammoniak-Abbau-Katalysators erhöht sich daher die Effizienz der Abgasreinigung hinsichtlich Investitionskosten und Energiebedarf.

Durch den erfindungsgemäßen Einsatz eines Ammoniak-Abbau-Katalysators kann selbstverständlich auch der Ausstoß von Ammoniak verringert werden. Dadurch kann die Einhaltung der gesetzlichen Grenzwerte sichergestellt werden und Umweltschäden durch Ammoniak können reduziert oder vermieden werden.

Ein weiterer Vorteil ist, dass im Ammoniak-Abbau-Katalysator bereits ein Teil der im Rauchgas enthaltenen Stickoxide (NOₓ) mit im Rauchgas vorhandenem Ammoniak (NH₃) abreagieren kann. Bei einer nachfolgenden Entstickung der Rauchgase mittels selektiver katalytischer Reduktion (SCR) kann dann die Menge an eingebrachtem Reduktionsmittel entsprechend reduziert werden, was eine weitere Einsparung von Betriebskosten mit sich bringt.

Bei einer bevorzugten Ausführungsform wird das katalytische Oxidieren der gasförmigen organischen Stoffe in einem edelmetallhaltigen Oxidationskatalysator durchgeführt. Der edelmetallhaltige Oxidationskatalysator kann die Konzentration von Kohlenmonoxid und gasförmigen organischen Stoffen im Rauchgas bei vergleichsweise niedrigen Temperaturen vermindert. Vorzugsweise findet die katalytische Oxidation im edelmetallhaltigen Oxidationskatalysator bei Temperaturen von 300 °C bis 650 °C statt. Vorzugsweise werden dabei im Rauchgas befindliches Kohlenmonoxid und gasförmige organische Stoffe zu Kohlendioxid oxidiert.

Der edelmetallhaltige Oxidationskatalysator enthält ein Edelmetall, vorzugsweise Palladium und/oder Platin, als katalytisch aktive Substanz. Beispielsweise kann es sich um einen edelmetalldotierten Zeolith-Katalysator handeln. Der edelmetallhaltige Oxidationskatalysator ist zur Oxidation von Kohlenmonoxid (CO) und/oder gasförmigen organischen Stoffen vorgesehen. Vorzugsweise werden CO und/oder gasförmige organische Stoffe im edelmetallhaltigen Oxidationskatalysator zu CO₂ oxidiert.

Bei einer bevorzugten Ausführungsform umfasst das katalytische Oxidieren der gasförmigen organischen Stoffe folgende Teilschritte:
i. Voroxidieren der gasförmigen organischen Stoffe in zumindest einem vanadiumhaltigen Oxidationskatalysator und
ii. Oxidieren von Zwischenprodukten der Voroxidation und im Rauchgas verbliebenen gasförmigen organischen Stoffen im edelmetallhaltigen Oxidationskatalysator.

Für die Zwecke dieser Offenbarung beziehen sich Richtungsangaben, wie "vor", "nach", sowie "vorgeschaltet" und "nachgeschaltet" auf die Strömungsrichtung der Rauchgase.

Die Bezeichnung "gasförmige organische Stoffe" bezieht sich im Kontext dieser Offenbarung auf organische Substanzen, die bei den jeweiligen Betriebsbedingungen im gasförmigen Aggregatzustand vorliegen oder in Form eines Aerosols von der Gasphase mitgerissen werden, insbesondere jedoch auf als "volatile organic compounds" bzw. "VOC" bekannte Verbindungen. Unter den Begriff "gasförmige organische Stoffe" fallen beispielsweise aliphatische und aromatische Kohlenwasserstoffe, Heterozyklen und Alkohole.

Unter Voroxidation soll im Kontext dieser Offenbarung eine unvollständige Oxidation verstanden werden. Unvollständig kann hier einerseits bedeuten, dass nur ein Teil der gasförmigen organischen Stoffe am Katalysator umgesetzt wird, während ein anderer Teil unverändert im Rauchgas verbleibt. Andererseits kann "unvollständige Oxidation" auch bedeuten, dass zumindest ein Teil der gasförmigen organischen Stoffe nicht vollständig zu Kohlendioxid (CO₂) oxidiert wird, sondern auch unvollständig oxidierte Zwischenprodukte wie zum Beispiel Kohlenmonoxid (CO) gebildet werden. Die beiden Formen der unvollständigen Oxidation schließen sich gegenseitig nicht aus und können sowohl gemeinsam als auch einzeln eintreten. Bevorzugt findet die Voroxidation von gasförmigen organischen Stoffen bei Temperaturen von 250 °C bis 500 °C, mehr bevorzugt von 300 °C bis 450 °C und am meisten bevorzugt von 350 °C bis 400 °C statt.

Der vanadiumhaltige Oxidationskatalysator ist ein Oxidationskatalysator, der als katalytisch aktive Substanz eine Vanadiumverbindung, vorzugsweise ein Vanadiumoxid und/oder ein Vanadat enthält und in Aufbau und Zusammensetzung für die Oxidation von organischen Stoffen, beispielsweise Ruß, optimiert ist. Vorzugsweise enthält der vanadiumhaltige Oxidationskatalysator keine Edelmetalle wie Palladium und/oder Platin.

Vorteilhafterweise kann der vanadiumhaltige Oxidationskatalysators kostengünstiger als der edelmetallhaltige Oxidationskatalysator hergestellt werden.

In einer besonders bevorzugten Ausführungsform werden über 80% der gasförmigen organischen Stoffe im vanadiumhaltigen Oxidationskatalysator zu CO₂ und/oder zu unvollständig oxidierten Zwischenprodukten wie beispielsweise CO umgesetzt.

Im vanadiumhaltigen Oxidationskatalysator werden die im Rauchgas enthaltenen gasförmigen organischen Stoffe nur unvollständig oxidiert. Dabei können zum einen Zwischenprodukte wie Kohlenmonoxid (CO) entstehen, zum anderen kann ein Teil der gasförmigen organischen Stoffe den Katalysator unverändert passieren. Gerade die Oxidation von Kohlenmonoxid (CO) zu Kohlendioxid (CO₂) zählt jedoch zu den Stärken eines edelmetallhaltigen, bevorzugt palladium- und/oder platinhaltigen, Oxidationskatalysators und findet an diesem bereits bei Temperaturen von mindestens 160 °C, vorzugsweise mindestens 220 °C statt, während für die Oxidation von gasförmigen organischen Stoffen am edelmetallhaltigen Oxidationskatalysator deutlich höhere Temperaturen notwendig sein können. Durch die Hintereinanderschaltung der beiden unterschiedlichen Oxidationskatalysatoren werden also deren individuelle Stärken optimal kombiniert und der Ausstoß von gasförmigen organischen Stoffen, vorzugsweise auch von Kohlenmonoxid, wird minimiert. Zudem ist es durch die Verwendung eines kostengünstigen vanadiumhaltigen Oxidationskatalysators zur Voroxidation der gasförmigen organischen Stoffe möglich, den edelmetallhaltigen Oxidationskatalysator kleiner zu dimensionieren, und/oder eine geringere Dotierung mit Edelmetall vorzusehen, als bei einem Verfahren ohne Voroxidation. Dies äußert sich insbesondere in verringerten Investitionskosten der Anlage.

Bei einer bevorzugten Ausführungsform wird ein Großteil der im Rauchgas befindlichen schwefelhaltigen Verbindungen an zumindest einem vanadiumhaltigen Oxidationskatalysator adsorbiert und gelangt somit nicht in den edelmetallhaltigen Oxidationskatalysator.

Die schwefelhaltigen Verbindungen können dabei sowohl Schwefeloxide (SOₓ), Schwefelwasserstoff (H₂S), Sulfide, Sulfite, Sulfate oder auch andere Schwefelverbindungen sein.

Als ein Großteil der im Rauchgas befindlichen schwefelhaltigen Verbindungen wird im Rahmen dieser Offenbarung ein Anteil von über 50%, bevorzugt von über 60%, mehr bevorzugt von über 70%, noch mehr bevorzugt von über 80% und besonders bevorzugt von über 90% jener schwefelhaltigen Verbindungen, welche sich vor Eintritt des Rauchgases in die Anordnung von Oxidationskatalysatoren im Rauchgas befinden, festgelegt.

Edelmetallhaltige, insbesondere palladium- und/oder platinhaltige, Oxidationskatalysatoren sind in der Regel anfällig gegenüber schwefelhaltigen Verbindungen wie zum Beispiel Schwefeloxiden (SOₓ). Diese können beispielsweise zur Bildung von Palladiumsulfaten und folglich einer irreversiblen Vergiftung bzw. Deaktivierung des Katalysators führen. Der vanadiumhaltige Oxidationskatalysator kann durch schwefelhaltige Vergiftungen ebenfalls vergiftet werden. Allerdings ist der Austausch des vanadiumhaltigen Oxidationskatalysators mit wesentlich geringeren Kosten verbunden, als der Austausch des edelmetallhaltigen Oxidationskatalysators. Durch seine Anordnung vor dem edelmetallhaltigen Oxidationskatalysator fängt der vanadiumhaltige Oxidationskatalysator einen Großteil der schwefelhaltigen Verbindungen ab, die somit nicht in den edelmetallhaltigen Oxidationskatalysator gelangen können. Die oben beschriebene Hintereinanderschaltung eines vanadiumhaltigen und eines edelmetallhaltigen Oxidationskatalysators kann daher im Vergleich mit der ausschließlichen Verwendung eines edelmetallhaltigen Oxidationskatalysators zu einer verlängerten Lebensdauer bzw. einem verlängerten Austauschintervall des edelmetallhaltigen Oxidationskatalysators führen, was sich insbesondere in verringerten Betriebskosten der Anlage äußert.

Die Voroxidation der gasförmigen organischen Stoffe kann bei manchen Ausführungsformen wenigstens teilweise schon im Ammoniak-Abbau-Katalysator stattfinden. In einer bevorzugten Ausführungsform werden über 50% der gasförmigen organischen Stoffe bereits im Ammoniak-Abbau-Katalysator zu CO₂ oder zu unvollständig oxidierten Zwischenprodukten wie beispielsweise CO umgesetzt.

Bei einer bevorzugten Ausführungsform ist zusätzlich eine selektive katalytische Reduktion (SCR) von in den Rauchgasen enthaltenen Stickoxiden (NOₓ), wie beispielsweise Stickstoffmonoxid (NO), Stickstoffdioxid (NO₂) oder Lachgas (N₂O) in einem Entstickungskatalysator vorgesehen, wobei vor der selektiven katalytischen Reduktion der Stickoxide (NOₓ) im Entstickungskatalysator ein Reduktionsmittel, vorzugsweise Ammoniak (NH₃), in die Rauchgase eingebracht wird.

Als Entstickungskatalysator kann beispielsweise ein Vanadium-Wolfram-Titanoxid-Katalysator vorgesehen sein.

Als Reduktionsmittel sind bevorzugt Ammoniak, Harnstoff und/oder Ammonium und/oder deren wässrige Lösungen vorgesehen. Wie einer fachkundigen Person bekannt ist, wirkt Harnstoff bei der SCR nicht direkt reduzierend, sondern spaltet erst Ammoniak ab, welches dann reduzierend wirkt. Das Reduktionsmittel kann sowohl im flüssigen als auch im gasförmigen Aggregatzustand eingebracht werden, wobei die gasförmige Einbringung bevorzugt ist.

Die SCR findet bevorzugt nach dem Ammoniak-Abbau und/oder nach der katalytischen Oxidation der gasförmigen organischen Stoffe statt.

In einer besonders bevorzugten Ausführungsform wird nach der selektiven katalytischen Reduktion im Entstickungskatalysator ein Teilgasstrom aus dem entstickten Rauchgas entnommen und einem externen Verdampfer zugeführt. Im externen Verdampfer wird ein Reduktionsmittel in den Teilgasstrom eingebracht und verdampft, anschließend wird dieser Teilgasstrom über ein Verteilgitter dem Rauchgasstrom vor dem Entstickungskatalysator zugeführt, um das Reduktionsmittel gleichmäßig einzubringen.

In einer weiteren Ausführungsvariante kann anstatt der SCR eine selektive nicht-katalytische Reduktion (SNCR) vorgesehen sein.

Bei einer bevorzugten Ausführungsform weist das Verfahren folgende Schritte auf:
Messen der Konzentration von stickstoffhaltigen Abgaskomponenten, insbesondere Stickoxiden (NOₓ), im Rauchgas vor und/oder nach der selektiven katalytischen Reduktion der Stickoxide (NOₓ) im Entstickungskatalysator;
Steuern und/oder Regeln der Menge an eingebrachtem Reduktionsmittel auf Basis der gemessenen Konzentrationen von stickstoffhaltigen Abgaskomponenten im Rauchgas vor und/oder nach der selektiven katalytischen Reduktion der Stickoxide (NOₓ) im Entstickungskatalysator.

Als stickstoffhaltige Abgaskomponente, deren Konzentration gemessen wird, kann ein Stickoxid, insbesondere Stickstoffmonoxid (NO), Stickstoffdioxid (NO₂) und/oder Lachgas (N₂O), oder Ammoniak vorgesehen sein.

Die Steuer- und/oder Regelungseinrichtung kann einen Regler, der die Menge an eingebrachtem Reduktionsmittel gemäß der Konzentration von stickstoffhaltigen Abgaskomponenten vor und/oder nach der SCR als Führungsgröße(n) regelt, und/oder eine Steuerung, die die Menge an eingebrachtem Reduktionsmittel gemäß der Konzentration von stickstoffhaltigen Abgaskomponenten vor und/oder nach der SCR als Eingangsgröße(n) steuert, aufweisen.

Durch die oben beschriebene Steuerung und/oder Regelung der Menge an eingebrachtem Reduktionsmittel kann eine im Wesentlichen vollständige Reaktion des Reduktionsmittels mit den Stickoxiden erreicht werden. Dadurch kann einerseits sichergestellt werden, dass in der SCR-Vorrichtung ein vorzugsweise im Wesentlichen vollständiger Abbau der Stickoxide stattfindet, andererseits lässt sich dadurch ein Reduktionsmittel-Schlupf, also der Ausstoß von überschüssigem Reduktionsmittel durch den Kamin, vorzugsweise im Wesentlichen vollständig vermeiden.

Auf Basis einer Messung der Ammoniakkonzentration vor der SCR kann die Temperatur im Ammoniak-Abbau-Katalysator erhöht werden, um dort einen möglichst vollständigen Abbau von Ammoniak zu gewährleisten.

Bei einer bevorzugten Ausführungsform werden die Rauchgase vor der katalytischen Oxidation in dem zumindest einen Oxidationskatalysator auf eine katalytische Reaktionstemperatur (T_{R}) von mindestens 300 °C, vorzugsweise mindestens 320 °C, erwärmt. Vorzugsweise werden die Rauchgase auf eine Temperatur zwischen 300 °C und 450 °C gebracht. Dadurch wird eine optimale katalytische Aktivität des zumindest einen Oxidationskatalysators sichergestellt.

Bei einer bevorzugten Ausführungsform werden die Rauchgase mit gleichbleibender Strömungsrichtung durch den Ammoniak-Abbau-Katalysator und den zumindest einen Oxidationskatalysator geführt, das heißt insbesondere, dass kein periodisches Umschalten der Strömungsrichtung erfolgt, sondern die Rauchgase im Wesentlichen immer durch denselben Einlass in die Anlage einströmen und immer durch denselben Auslass aus der Anlage ausströmen.

Die gleichbleibende Strömungsrichtung hat den Vorteil, dass Substanzen wie beispielsweise Ammoniak, welche innerhalb der Anlage, insbesondere nahe des Einlasses, adsorbiert werden, nicht durch den Kamin ausgetragen werden können, da kein Wechsel der Strömungsrichtung stattfindet. Die gleichbleibende Strömungsrichtung kann daher eine weitere Reduktion des NH₃-Ausstoßes bewirken.

Bei einer bevorzugten Ausführungsform erfolgt das Erwärmen der Rauchgase vor der katalytischen Oxidation durch rekuperativen Wärmeaustausch der rückgewonnenen Restwärme der gereinigten Rauchgase.

Durch den rekuperativen Wärmeaustausch, vorzugsweise in einem rekuperativen Gas-Gas-Wärmetauscher, ist es möglich, das Verfahren in einer konstruktiv einfachen Vorrichtung mit gleichbleibender Strömungsrichtung durchzuführen. Die Möglichkeit einen rekuperativen Wärmetauscher einzusetzen, ergibt sich insbesondere dadurch, dass die gasförmigen organischen Stoffe nicht thermisch, sondern katalytisch oxidiert werden, wofür bereits Temperaturen um 320 °C ausreichend sein können. Bei Verfahren zur thermischen Oxidation, wie beispielsweise der im Stand der Technik bekannten RTO, sind dagegen Temperaturen über 800 °C notwendig, was den Einsatz eines rekuperativen Wärmetauschers aus materialtechnischen Gründen unwirtschaftlich oder sogar undurchführbar macht. Daher wird bei diesen Verfahren in der Regel mit regenerativem Wärmeaustausch gearbeitet, mit allen bekannten Nachteilen.

In einer bevorzugten Ausführungsform ist vor dem zumindest einen Oxidationskatalysator eine Wärmequelle vorgesehen, die die Tempertur der Rauchgase auf eine katalytische Reaktionstemperatur (T_{R}) anhebt. Die Wärmequelle kann beispielsweise ein Wärmetauscher, ein Brenner oder eine elektrische Heizung sein.

Die Aufgabe wird auch durch ein Verfahren zur Zementklinkerherstellung nach Anspruch 10 gelöst. Das Verfahren kann die folgenden Schritte aufweisen:
Brennen von Rohmaterial zu Zementklinker in einem Ofen, insbesondere einem Drehrohrofen,
Vorwärmen der Rohmaterialien mit Rauchgasen des Ofens in einem Vorwärmer, insbesondere einem Zyklonvorwärmer,
vorzugsweise Kühlen des Zementklinkers in einem Klinkerkühler, insbesondere einem Rostkühler, und
Reinigen der Rauchgase durch das oben beschriebene Verfahren.

Die Rauchgase der Zementklinkerherstellung können eine Reihe von Schadstoffen, wie beispielsweise Stickoxide, Kohlenmonoxid und/oder gasförmige organische Stoffe enthalten. Insbesondere bei der Verwendung von Ersatzbrennstoffen, wie beispielsweise Abfällen, können die Rauchgase auch Ammoniak enthalten. Die Anwendung des oben beschriebenen Verfahrens zur Reinigung von Rauchgasen aus der Zementklinkerherstellung ermöglicht es, den Ausstoß dieser Schadstoffe zu minimieren und zugleich sowohl die Investitions- als auch die Betriebskosten der Rauchgasreinigung möglichst gering zu halten.

Die Aufgabe wird des Weiteren durch ein Verfahren zur Verbrennung von Abfällen nach Anspruch 11 gelöst, wobei das Verfahren die folgenden Schritte aufweisen kann:
Verbrennung der Abfälle; und
Reinigen der Rauchgase der Verbrennung durch das oben beschriebene Verfahren.

Die Rauchgase der Müllverbrennung können eine Reihe von Schadstoffen, wie beispielsweise Stickoxide, Ammoniak und/oder gasförmige organische Stoffe, enthalten. Die Anwendung des oben beschriebenen Verfahrens zur Reinigung von Rauchgasen aus der Müllverbrennung ermöglicht es, den Ausstoß dieser Schadstoffe zu minimieren und zugleich sowohl die Investitions- als auch die Betriebskosten der Rauchgasreinigung möglichst gering zu halten.

Die Aufgabe wird auch durch eine Vorrichtung zur Reinigung von gasförmige organische Stoffe enthaltenden Rauchgasen nach Anspruch 12 gelöst. Die oben in Zusammenhang mit dem Verfahren zur Reinigung von gasförmige organische Stoffe enthaltenden Rauchgasen beschriebenen Merkmale, technischen Effekte und Vorteile sind entsprechend auf die Vorrichtung übertragbar.

Erfindungsgemäß ist dem zumindest einen Oxidationskatalysator ein Ammoniak-Abbau-Katalysator zum Abbau von im Rauchgas befindlichem Ammoniak (NH₃) vorgeschaltet. Der Ammoniak-Abbau-Katalysator weist ein Gehäuse auf, innerhalb dessen ein oder mehrere Katalysatorelemente angeordnet sind. Das Gehäuse kann ein eigenes Gehäuse oder ein gemeinsames Gehäuse mit dem zumindest einen Oxidationskatalysator sein. Die Katalysatorelemente sind bevorzugt in Form von Monolithen mit einer Vielzahl an im Wesentlichen parallel zueinander verlaufenden Strömungskanälen ausgebildet. Alternativ können zum Beispiel auch anders geformte Monolithen oder Schüttungen des Katalysatormaterials vorgesehen sein.

Bei einer bevorzugten Ausführungsform enthält die Vorrichtung zumindest einen edelmetallhaltigen Oxidationskatalysator zur katalytischen Oxidation von gasförmigen organischen Stoffen, wobei insbesondere ein Oxidationskatalysator des zumindest einen Oxidationskatalysators ein edelmetallhaltiger Oxidationskatalysator ist.

Bei einer bevorzugten Ausführungsform weist die Vorrichtung zumindest einen vanadiumhaltigen Oxidationskatalysator zum Voroxidieren der gasförmigen organischen Stoffe und zumindest einen edelmetallhaltigen Oxidationskatalysator zum Oxidieren von Zwischenprodukten der Voroxidation und im Rauchgas verbliebenen gasförmigen organischen Stoffen auf, wobei insbesondere ein Oxidationskatalysator des zumindest einen Oxidationskatalysators ein vanadiumhaltiger Oxidationskatalysator ist und ein Oxidationskatalysator des zumindest einen Oxidationskatalysators ein edelmetallhaltiger Oxidationskatalysator ist und wobei der zumindest eine vanadiumhaltige Oxidationskatalysator dem zumindest einen edelmetallhaltigen Oxidationskatalysator vorgeschalten ist.

Die Oxidationskatalysatoren können jeweils ein Gehäuse oder ein gemeinsames Gehäuse aufweisen, innerhalb dessen ein oder mehrere Katalysatorelemente angeordnet sind. Die Oxidationskatalysatoren können auch ein gemeinsames Gehäuse mit dem Ammoniak-Abbau-Katalysator aufweisen. Die Katalysatorelemente sind bevorzugt in Form von Monolithen mit einer Vielzahl an im Wesentlichen parallel zueinander verlaufenden Strömungskanälen ausgebildet. Alternativ können zum Beispiel auch anders geformte Monolithen oder Schüttungen des Katalysatormaterials vorgesehen sein.

Bei einer bevorzugten Ausführungsform sind zusätzlich eine Zufuhreinrichtung zur Einbringung eines Reduktionsmittels in die Rauchgase und ein Entstickungskatalysator zur selektiven katalytischen Reduktion (SCR) von in den Rauchgasen enthaltenen Stickoxiden (NOₓ) vorgesehen. Die Zufuhreinrichtung kann einen Reduktionsmittel-Verdampfer, eine Mischvorrichtung, eine Anordnung von Düsen zur Einbringung des Reduktionsmittels und/oder ein Verteilgitter für dessen gleichmäßige Verteilung im Rauchgas umfassen. Der Entstickungskatalysator weist ein Gehäuse auf, innerhalb dessen ein oder mehrere Katalysatorelemente angeordnet sind. Das Gehäuse kann ein eigenes Gehäuse oder das oben erwähnte Gehäuse der Oxidationskatalysatoren und/oder des Ammoniak-Abbau-Katalysators sein. Die Katalysatorelemente sind bevorzugt in Form von Monolithen mit einer Vielzahl an im Wesentlichen parallel zueinander verlaufenden Strömungskanälen ausgebildet. Alternativ können zum Beispiel auch anders geformte Monolithen oder Schüttungen des Katalysatormaterials vorgesehen sein.

In einer bevorzugten Ausführungsform weist die Vorrichtung zur Reinigung von gasförmige organische Stoffe enthaltenden Rauchgasen einen katalytischen Reaktor auf. Der katalytische Reaktor ist bevorzugt als Metallgehäuse ausgebildet. In dem katalytischen Reaktor befindet sich der Ammoniak-Abbau-Katalysator, der zumindest eine Oxidationskatalysator und gegebenenfalls weitere der oben angeführten Katalysatoren. Der katalytische Reaktor weist bevorzugt genau einen Einlass auf, durch den die zu reinigenden Rauchgase in den katalytischen Reaktor einströmen. Der katalytische Reaktor weist bevorzugt genau einen vom Einlass verschiedenen Auslass auf, durch den die gereinigten Rauchgase aus dem katalytischen Reaktor ausströmen. Vorzugsweise strömen die Rauchgase im Wesentlichen vollständig durch den Einlass in den katalytischen Reaktor ein und im Wesentlichen vollständig durch den Auslass aus dem katalytischen Reaktor aus.

In weiteren Ausführungsvarianten können der erfindungsgemäßen Vorrichtung weitere Vorrichtungen zur Abgasbehandlung vor- und/oder nachgeschalten sein, beispielsweise ein keramischer Heißgasfilter, ein Gewebefilter, ein elektrostatischer Abscheider oder ein Rauchgaswäscher.

Die Erfindung wird nachstehend anhand eines bevorzugten Ausführungsbeispiels in den Zeichnungen weiter erläutert.
Fig. 1 zeigt schematisch eine Anlage zur Zementklinkerherstellung, bei der das erfindungsgemäße Verfahren zum Einsatz kommt;
Fig. 2 zeigt schematisch eine Anlage zur Müllverbrennung, bei der das erfindungsgemäße Verfahren zum Einsatz kommt.
Fig. 3 zeigt schematisch eine Vorrichtung zur Reinigung von gasförmige organische Stoffe enthaltenden Rauchgasen gemäß der Erfindung mit einem rekuperativen Gas-Gas-Wärmetauscher und einem katalytischen Reaktor; und

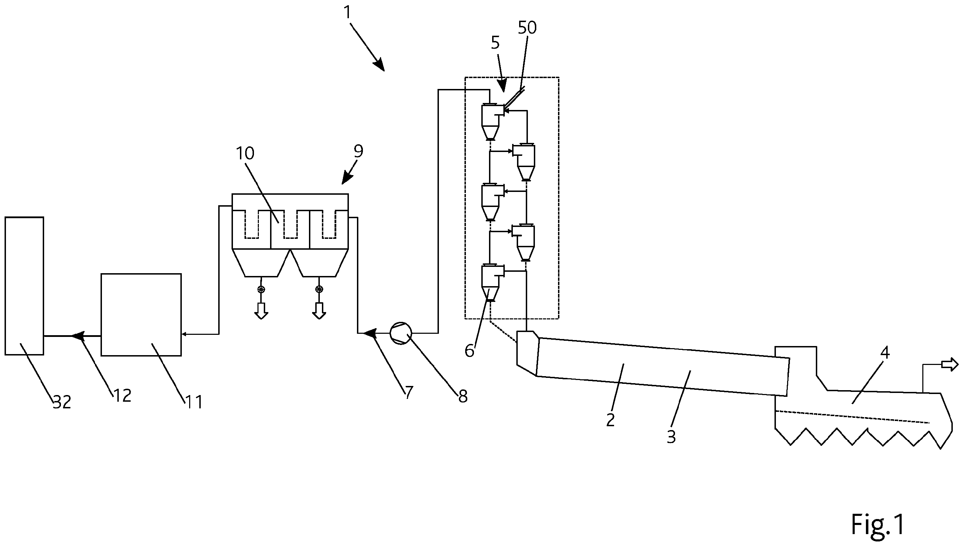

Fig. 1 zeigt eine Zementklinkerherstellungsanlage 1 mit einem als Drehrohrofen 2 ausgebildeten Ofen 3, an die ein Klinkerkühler 4 angeschlossen ist. In dem Drehrohrofen 2 werden Rohstoffe (nicht gezeigt) zu Zementklinker (nicht gezeigt) gebrannt und anschließend im Klinkerkühler 4 gekühlt. Die Rohstoffe werden, bevor sie dem Drehrohrofen 2 zugeführt werden, in einem Zyklonvorwärmer 5 vorgewärmt. Der Drehrohrofen 2 ist zwischen dem Klinkerkühler 4 und dem Zyklonvorwärmer 5 angeordnet. Der Zyklonvorwärmer 5 weist eine Mehrzahl miteinander verbundener Zyklone 6 auf. Nach dem Gegenstromprinzip gelangen die Rohstoffe von einer Materialaufgabe 50 durch den Zyklonvorwärmer 5 in den Drehrohrofen 2, wohingegen die bei der Verbrennung entstehenden Ofenabgase bzw. Rauchgase 7 gegen den Strom der Rohstoffe durch den Zyklonvorwärmer 5 strömen. In Richtung der Rauchgase 7 gesehen liegt der Zyklonvorwärmer 5 also nach dem Ofen 3. Die Rohstoffe werden auf bis zu 800°C aufgeheizt und in Richtung des Drehrohrofens 2 transportiert. Das Rauchgas 7 wird gleichzeitig von ca. 850°C auf 300°C bis 400°C abgekühlt. Bevor die Rohstoffe in den Drehrohrofen 2 gelangen, ist in modernen Anlagen ein sogenannter Kalzinator (nicht eingezeichnet) eingebaut, der über eine separate Feuerung verfügt und die Aufgabe hat, den Kalkstein durch hohe Temperaturen und ausreichend Verweilzeit zu entsäuern. Im Drehrohrofen 2 werden die Rohstoffe weiter aufgeheizt und schließlich bei Materialtemperaturen von bis zu 1600°C zu Zementklinker gesintert, wobei sich dabei typische Klinkerphasen (Calcium-Aluminium-Silikate) bilden.

Von dem Zyklonvorwärmer 5 gelangt das zu reinigende Rauchgas 7 anschließend über ein Gebläse 8 in eine Filteranlage 9 mit zumindest einer Filtervorrichtung 10, mit welcher das Rauchgas 7 entstaubt wird. Anschließend gelangt das entstaubte Rauchgas 7 in eine Vorrichtung 11 zur Reinigung von gasförmige organische Stoffe enthaltenden Rauchgasen gemäß der Erfindung. Das gereinigte Rauchgas 12 gelangt anschließend über einen Kamin 32 nach außen.

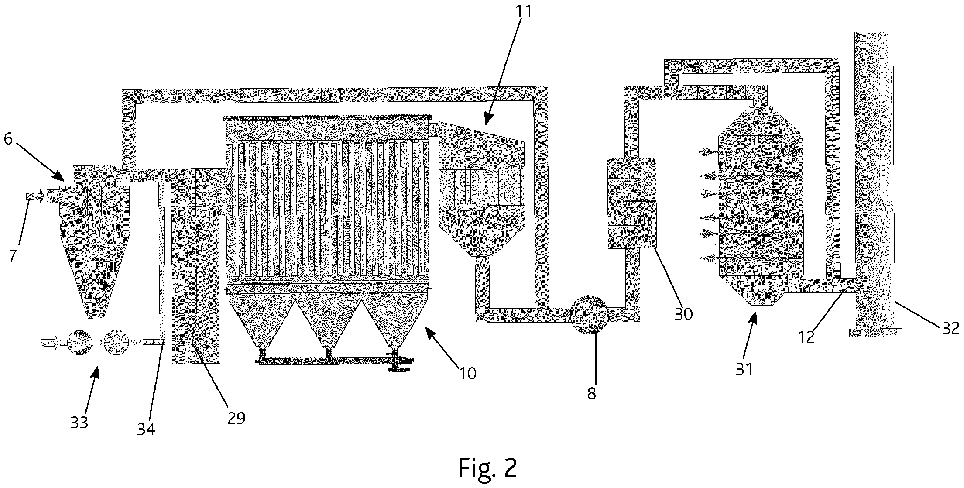

Fig. 2 zeigt eine Rauchgasreinigung einer Müllverbrennungsanlage. Das zu reinigende Rauchgas 7 wird zuerst mittels eines Zyklons 6 vorentstaubt. Dann wird mittels einer Dosiervorrichtung 33 ein pulverförmiges Sorptionsmittel 34 eingebracht, beispielsweise Aktivkohle zur Abscheidung von Schwermetallen (z.B. Quecksilber) und/oder Kalk (Ca(OH)₂), Kalkstein (CaCO₃) oder Natriumbicarbonat (NaHCO₃) zur Entschwefelung. Das Rauchgas 7 durchläuft dann einen Sorptionsreaktor 29, in dem das Sorptionsmittel 34 Zeit hat, mit den entsprechenden Abgaskomponenten zu reagieren. In einer Filtervorrichtung 10 wird das Rauchgas 7 entstaubt, wobei auch das vorhereingebrachte Sorptionsmittel 34 wieder abgeschieden wird. Anschließend gelangt das entstaubte Rauchgas 7 in eine Vorrichtung 11 zur Reinigung von gasförmige organische Stoffe enthaltenden Rauchgasen gemäß der Erfindung. Danach wird das Rauchgas 7 über ein Gebläse 8 und einen Schalldämmkanal 30 in einen Kondensationswärmetauscher 31 geleitet, bevor es als gereinigtes Rauchgas 12 durch einen Kamin 32 in die Umwelt emittiert wird.

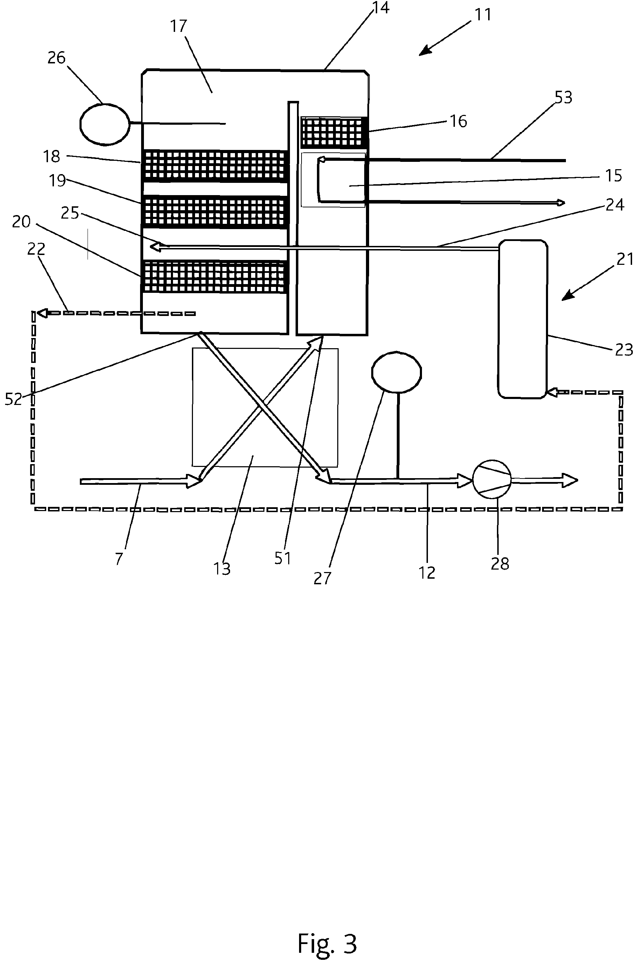

Fig. 3 zeigt die Vorrichtung 11 zur Reinigung von gasförmige organische Stoffe enthaltenden Rauchgasen im Detail. Das zu reinigende Rauchgas 7 durchströmt einen rekuperativen Gas-Gas-Wärmetauscher 13 und wird durch Wärmeaustausch der rückgewonnenen Restwärme des gereinigten Rauchgases 12 erwärmt. Durch einen Einlass 51 strömt das Rauchgas weiter in einen katalytischen Reaktor 14. Durch einen weiteren Wärmetauscher 15 wird das Rauchgas auf eine katalytische Reaktionstemperatur T_{R} gebracht, falls die Reaktionstemperatur T_{R} noch nicht im rekuperativen Gas-Gas-Wärmetauscher 13 erreicht wurde. Über die Leitung 53 wird die dafür notwendige Wärme über ein Wärmeaustauschmedium eingebracht. Das Rauchgas wird dann durch einen Ammoniak-Abbau-Katalysator 16 zum Abbau von im Rauchgas befindlichem Ammoniak (NH₃) über eine Einströmhaube 17 nacheinander durch einen vanadiumhaltigen Oxidationskatalysator 18 zum Voroxidieren der gasförmigen organischen Stoffe, einen edelmetallhaltigen Oxidationskatalysator 19 zum Oxidieren von Zwischenprodukten der Voroxidation und im Rauchgas verbliebenen gasförmigen organischen Stoffen und einen Entstickungskatalysator 20 zur selektiven katalytischen Reduktion (SCR) von in den Rauchgasen enthaltenen Stickoxiden (NOₓ) geleitet. In der Einströmhaube 17 sind Einbauten, insbesondere Leitbleche, zur Vergleichmäßigung der Strömung des Rauchgases vorgesehen.

Mithilfe einer Zufuhreinrichtung 21 wird vor der Entstickung im Entstickungskatalysator 20 Ammoniak (NH₃) als Reduktionsmittel in die Rauchgase eingebracht. Dafür wird über eine strichlierte Leitung 22 ein Teil des gereinigtes Rauchgases 12 in einen Verdampfer 23 geleitet, in dem eine wässrige Ammoniaklösung verdampft und mit dem abgezweigten Rauchgas vermischt wird. Dieses Gemisch wird über eine Leitung 24 wieder in den katalytischen Reaktor 14 eingebracht und über ein Verteilgitter 25 im Rauchgas verteilt, bevor das Rauchgas den Entstickungskatalysator 20 durchströmt.

Durch einen Auslass 52 verlässt das gereinigte Rauchgas 12 den katalytischen Reaktor 14 wieder und durchströmt ein weiteres Mal den rekuperativen Gas-Gas-Wärmetauscher 13, um seine Restwärme an das zu reinigende Rauchgas 7 zu übertragen. Danach wird das gereinigte Rauchgas 12 über einen Ventilator 28 durch einen Kamin 32 in die Atmosphäre geleitet.

Eine erste Messeinrichtung 26 misst die Konzentrationen von Ammoniak und Stickoxiden im Rauchgas, wobei der Messwert der Ammoniakkonzentration der Messeinrichtung 26 dazu herangezogen wird, die über die Leitung 53 eingebrachte Wärmemenge zu regeln. Bei Ammoniakkonzentrationen über einem definierten Schwellenwert wird auf diese Weise die Temperatur im Ammoniak-Abbau-Katalysator 16 erhöht, bis ein im Wesentlichen vollständiger Abbau von Ammoniak stattfindet. Eine zweite Messeinrichtung 27 misst die Konzentrationen von Ammoniak und Stickoxiden im gereinigten Rauchgas 12. Die Menge an wässriger Ammoniaklösung, die im Verdampfer 23 verdampft und über das Verteilgitter 25 in den katalytischen Reaktor 14 eingebracht wird, wird abhängig von der Ammoniak- und Stickoxidkonzentration geregelt, welche von der ersten Messeinrichtung 26 und der zweiten Messeinrichtung 27 gemessen werden.

Das erfindungsgemäße Verfahren sowie die Vorrichtung zur Reinigung von gasförmige organische Stoffe enthaltenden Rauchgasen kann bei verschiedensten industriellen Verfahren, wie beispielsweise Müll- oder Biomasseverbrennung, Glasherstellung, Zementklinkerherstellung, Kalkherstellung, Lithiumaufbereitung oder auch in der Papierindustrie zum Einsatz kommen. Grundsätzlich kommen dafür sämtliche industrielle Verfahren infrage, deren Abgase mit gasförmigen organischen Stoffen belastet sind.

### Bezugszeichenliste:

- 1: Zementklinkerherstellungsanlage
- 2: Drehrohrofen
- 3: Ofen
- 4: Klinkerkühler
- 5: Zyklonvorwärmer
- 6: Zyklon
- 7: zu reinigendes Rauchgas
- 8: Gebläse
- 9: Filteranlage
- 10: Filtervorrichtung
- 11: Vorrichtung zur Reinigung von gasförmige organische Stoffe enthaltenden Rauchgasen
- 12: gereinigtes Rauchgas
- 13: rekuperativer Gas-Gas-Wärmetauscher
- 14: katalytischer Reaktor
- 15: Wärmetauscher
- 16: Ammoniak-Abbau-Katalysator
- 17: Einströmhaube
- 18: vanadiumhaltiger Oxidationskatalysator
- 19: edelmetallhaltiger Oxidationskatalysator
- 20: Entstickungskatalysator
- 21: Zufuhreinrichtung
- 22: Leitung
- 23: Verdampfer
- 24: Leitung
- 25: Verteilgitter
- 26: erste Messeinrichtung
- 27: zweite Messeinrichtung
- 28: Ventilator
- 29: Sorptionsreaktor
- 30: Schalldämmkanal
- 31: Kondensationswärmetauscher
- 32: Kamin
- 33: Dosiervorrichtung
- 34: Sorptionsmittel
- 50: Materialaufgabe
- 51: Einlass
- 52: Auslass
- 53: Leitung

## Patentansprüche

1. Verfahren zur Reinigung von gasförmige organische Stoffe enthaltenden Rauchgasen mit den Schritten:
Katalytisches Oxidieren der gasförmigen organischen Stoffe an zumindest einem Oxidationskatalysator,
Erwärmen der Rauchgase (7) vor der katalytischen Oxidation durch Wärmeaustausch der rückgewonnenen Restwärme der gereinigten Rauchgase (12) auf eine katalytische Reaktionstemperatur (T_{R})
**dadurch gekennzeichnet, dass**
vor dem katalytischen Oxidieren der gasförmigen organischen Stoffe im Rauchgas befindliches Ammoniak (NH₃) an einem Ammoniak-Abbau-Katalysator (16) abgebaut wird.

2. Verfahren nach Anspruch 1, **dadurch gekennzeichnet, dass** das katalytische Oxidieren der gasförmigen organischen Stoffe an einem edelmetallhaltigen Oxidationskatalysator (19) durchgeführt wird.

3. Verfahren nach Anspruch 2, **dadurch gekennzeichnet, dass** das katalytische Oxidieren der gasförmigen organischen Stoffe folgende Teilschritte umfasst:
i. Voroxidieren der gasförmigen organischen Stoffe an zumindest einem vanadiumhaltigen Oxidationskatalysator (18) und
ii. Oxidieren von Zwischenprodukten der Voroxidation und im Rauchgas verbliebenen gasförmigen organischen Stoffen am edelmetallhaltigen Oxidationskatalysator (19).

4. Verfahren nach Anspruch 3, **dadurch gekennzeichnet, dass** ein Großteil der im Rauchgas befindlichen schwefelhaltigen Verbindungen an dem zumindest einen vanadiumhaltigen Oxidationskatalysator (18) adsorbiert wird.

5. Verfahren nach einem der Ansprüche 1 bis 4, **dadurch gekennzeichnet, dass** zusätzlich eine selektive katalytische Reduktion (SCR) von in den Rauchgasen enthaltenen Stickoxiden (NOₓ) an einem Entstickungskatalysator (20) vorgesehen ist, wobei vor der selektiven katalytischen Reduktion der Stickoxide (NOₓ) am Entstickungskatalysator (20) ein Reduktionsmittel, vorzugsweise Ammoniak (NH₃), in die Rauchgase eingebracht wird.

6. Verfahren nach Anspruch 5, **dadurch gekennzeichnet, dass** das Verfahren folgende Schritte aufweist:
Messen der Konzentration von stickstoffhaltigen Abgaskomponenten, insbesondere Stickoxiden (NOₓ), im Rauchgas vor und/oder nach der selektiven katalytischen Reduktion der Stickoxide (NOₓ) am Entstickungskatalysator (20);
Steuern und/oder Regeln der Menge an eingebrachtem Reduktionsmittel auf Basis der gemessenen Konzentrationen von stickstoffhaltigen Abgaskomponenten im Rauchgas vor und/oder nach der selektiven katalytischen Reduktion der Stickoxide (NOₓ) am Entstickungskatalysator (20).

7. Verfahren nach einem der Ansprüche 1 bis 6, **dadurch gekennzeichnet, dass** die Rauchgase vor der katalytischen Oxidation auf eine Temperatur von mindestens 300 °C, vorzugsweise mindestens 320 °C erwärmt werden.

8. Verfahren nach einem der Ansprüche 1 bis 7, **dadurch gekennzeichnet, dass** die Rauchgase mit gleichbleibender Strömungsrichtung durch den Ammoniak-Abbau-Katalysator (16) und den zumindest einen Oxidationskatalysator geführt werden.

9. Verfahren nach Anspruch 8, **dadurch gekennzeichnet, dass** das Erwärmen der Rauchgase (7) vor der katalytischen Oxidation durch rekuperativen Wärmeaustausch der rückgewonnenen Restwärme der gereinigten Rauchgase (12) erfolgt.

10. Verfahren zur Zementklinkerherstellung mit den Schritten:
Brennen von Rohmaterial zu Zementklinker in einem Ofen (3),
Vorwärmen der Rohmaterialien mit Rauchgasen des Ofens (3),
Reinigen der Rauchgase (7) durch ein Verfahren nach einem der Ansprüche 1 bis 9.

11. Verfahren zur Verbrennung von Abfällen, **dadurch gekennzeichnet, dass** die Rauchgase der Verbrennung durch ein Verfahren nach einem der Ansprüche 1 bis 9 gereinigt werden.

12. Vorrichtung (11) zur Reinigung von gasförmige organische Stoffe enthaltenden Rauchgasen, aufweisend:
zumindest einen Oxidationskatalysator zur katalytischen Oxidation von gasförmigen organischen Stoffen und
zumindest einen Wärmetauscher zur Erwärmung der Rauchgase (7) aus Rückgewinnung der Restwärme der gereinigten Rauchgase (12) vor der katalytischen Oxidation auf eine katalytische Reaktionstemperatur (T_{R}),
**dadurch gekennzeichnet, dass**
dem zumindest einen Oxidationskatalysator ein Ammoniak-Abbau-Katalysator (16) zum Abbau von im Rauchgas befindlichem Ammoniak (NH₃) vorgeschalten ist.

13. Vorrichtung (11) nach Anspruch 12, **dadurch gekennzeichnet, dass** die Vorrichtung (11) zumindest einen edelmetallhaltigen Oxidationskatalysator (19) zur katalytischen Oxidation von gasförmigen organischen Stoffen enthält.

14. Vorrichtung (11) nach Anspruch 12, **dadurch gekennzeichnet, dass** die Vorrichtung (11) zumindest einen vanadiumhaltigen Oxidationskatalysator (18) zum Voroxidieren der gasförmigen organischen Stoffe und zumindest einen edelmetallhaltigen Oxidationskatalysator (19) zum Oxidieren von Zwischenprodukten der Voroxidation und im Rauchgas verbliebenen gasförmigen organischen Stoffen aufweist,
wobei der zumindest eine vanadiumhaltige Oxidationskatalysator (18) dem zumindest einen edelmetallhaltigen Oxidationskatalysator (19) vorgeschalten ist.

15. Vorrichtung (11) nach einem der Ansprüche 12 bis 14, **dadurch gekennzeichnet, dass** zusätzlich eine Zufuhreinrichtung (21) zur Einbringung eines Reduktionsmittels in die Rauchgase und ein Entstickungskatalysator (20) zur selektiven katalytischen Reduktion (SCR) von in den Rauchgasen enthaltenen Stickoxiden (NOₓ) vorgesehen ist.
